# FASCICULE DE BREVET EUROPEEN

(11) **EP 1 509 089 B1**
(45) Date de publication et mention de la délivrance du brevet: **19.10.2005**
(21) Numéro de dépôt: 03755200.7
(22) Date de dépôt: 26.05.2003
(51) Int. Cl.: A22C 7/00

(54) **PROCEDE ET DISPOSITIFS DE FABRICATION DE STEAKS HACHES FOURRES D'UNE GARNITURE**
VERFAHREN UND VORRICHTUNG ZUR HERSTELLUNG VON HACKFLEISCH MIT EINER FÜLLUNG
METHOD AND DEVICE FOR THE PRODUCTION OF MINCEMEAT STEAKS PROVIDED WITH A FILLING

(30) Priorité: 29.05.2002 FR 0206534
(43) Date de publication de la demande: 02.03.2005
(73) Titulaire: NIJAL, 56150 Baud (FR)
(72) Inventeur: LE PAIH, Jacques, F-56930 Plumeliau (FR)
(74) Mandataire: Bentz, Jean-Paul
(86) Numéro de dépôt international: PCT/FR2003/001578
(87) Numéro de publication internationale: WO 2003/099021

(56) Documents cités:
- EP-A- 0 643 915
- FR-A- 2 577 389
- GB-A- 523 792
- US-A- 3 354 842
- US-A- 4 195 489

## Description

La présente invention concerne la fabrication de pavés de viande hachée, notamment steaks hachés, pourvus d'une garniture intérieure.

Pour la fabrication de steaks hachés, il existe des machines de formage basées sur le principe d'un tiroir à alvéoles déplacé entre un poste d'injection de viande hachée dans les alvéoles et un poste d'éjection des steaks formés, telles celles décrites par exemple dans les demandes de brevet français n° 98 12901 et n° 00 0539 au nom de la présente demanderesse. Pour garnir intérieurement les steaks hachés, il est connu, notamment de par la deuxième de ces demandes, de procéder par injection, au moyen d'aiguilles tubulaires.

Ce système convient parfaitement pour l'injection de sauces, mais il est par contre strictement limité à cette utilisation. Et de par son principe même, il n'est pas concevable de l'appliquer à l'introduction de garnitures qui ne sont pas complètement ou suffisamment liquides. Or, dans les développements à venir de ce genre de produits, l'on doit s'attendre à ce que les garnitures évoluent beaucoup quant à leur diversité, tant dans leur texture que dans leur contenu ou dans leur forme.

Est également connu, de par le brevet FR 2 577 389 au nom de Virassimy Joseph, un procédé de fabrication de pavés de viande hachée fourrés selon lequel les différentes étapes de la fabrication sont effectuées en des postes successifs placés le long d'un agencement de deux bandes transporteuses synchrones définissant ensemble des alvéoles. Les postes sont d'amont en aval un poste de chargement du fond des alvéoles en viande hachée, un poste d'emboutissage de la couche de fond dans les alvéoles, un poste de distribution de garniture, un poste de chargement d'une couche supérieure de viande hachée, un poste de compactage et un poste d'éjection. Comme dans le système mentionné auparavant, la fabrication s'effectue donc au pas à pas, nécessitant un temps d'arrêt des alvéoles en chaque poste ; ce qui dans un processus de production industrielle limite par trop les cadences.

D'autre part, dans l'un et l'autre de ces deux systèmes, les pressions mises en jeu pour le formage et le compactage sont nécessairement importantes, et les contraintes qui s'exercent sur la viande de façon anarchique sont très préjudiciables à la structure interne de celle-ci. Il en résulte des pavés compacts de texture plus ou moins granuleuse et qui sont secs du fait de libérer beaucoup d'exsudats.

Ces produits sont donc d'une qualité médiocre, comparés à des steaks hachés préparés de façon traditionnelle, où la viande sortie de la grille du hachoir en fils dits "cheveux d'ange" n'a subi qu'un simple compactage qui n'a pas détruit cette structure filaire, si bien qu'elle conserve une texture relativement légère et moelleuse, ainsi qu'un maximum de saveur.

L'invention a été réalisée en vue d'optimiser la fabrication de steaks hachés fourrés sous de multiples aspects dont la simplicité de mise en oeuvre et la fiabilité, la flexibilité, la qualité et la possibilité de cadences en accord avec une production industrielle.

A cet effet, l'invention réside d'abord dans un procédé de fabrication de pavés de viande hachée, notamment steaks hachés, fourrés d'une garniture, caractérisé en ce qu'il consiste à former une veine de viande hachée fourrée continue en réalisant une couche inférieure de viande hachée continue ; déposant la garniture sur ladite couche inférieure ; réalisant une couche supérieure de viande hachée continue en recouvrement de ladite couche inférieure et de la garniture déposée sur celle-ci ;
puis à couper en portions ladite veine de viande hachée fourrée ; et à mettre en forme lesdites portions en les tassant de chaque côté de ladite veine de viande hachée fourrée pour former le contour desdites portions, et verticalement pour conférer aux portions l'épaisseur souhaitée.

La veine de viande hachée fourrée n'étant calibrée que légèrement plus large et plus épaisse que les produits finaux, les contraintes nécessaires au formage sont minimales, et d'autre part, si dans la veine la viande est texturée en fils orientés longitudinalement, autrement dit en "cheveux d'ange", ceux-ci ne subissent ces contraintes que perpendiculairement. Il en résulte que le formage n'a essentiellement qu'un effet de tassement modéré plutôt que d'écrasement, qui ne casse pas la structure filaire de la viande, et qui s'apparente donc au plus près du formage traditionnel pour en avoir tous les avantages. De plus, des essais ont permis de constater et de valider le fait qu'il n'y avait pas lieu de recourir à un excès de pressage vertical pour réaliser une jonction adéquate entre les couches de viande hachée inférieure et supérieure autour de la garniture.

L'invention concerne également un dispositif de mise en oeuvre dudit procédé défini ci-dessus, caractérisé en ce qu'il comprend :
une bande de transport principale défilant en continu ;
et au-dessus de celle-ci, pour y former ladite veine de viande hachée fourrée, des moyens pour former ladite couche de viande hachée inférieure, des moyens pour déposer ladite garniture sur ladite couche de viande hachée inférieure, et des moyens pour former ladite couche de viande hachée supérieure en recouvrement de ladite couche de viande hachée inférieure et de ladite garniture ;
ainsi que des moyens pour couper ladite veine de viande hachée fourrée en portions et des moyens de formage desdites portions, qui fonctionnent en synchronisme avec ladite bande de transport.

Dans une forme de réalisation avantageuse de l'invention, lesdits moyens pour former l'une et/ou l'autre des couches de viande hachée inférieure et supérieure comprennent au moins un bec de distribution alimenté par un organe de régulation de débit dit "poussoir", auquel est de préférence associé un hachoir.

Avantageusement, les moyens de dépôt de garniture sont aptes à déposer latéralement la garniture sur la couche de viande hachée inférieure.

Selon un mode de réalisation, le dispositif comprend une bande de transport principale au-dessus de laquelle sont positionnés d'amont en aval, lesdits moyens pour former la couche de viande hachée inférieure, lesdits moyens pour déposer la garniture, et lesdits moyens pour former la couche de viande hachée supérieure.

Selon un autre mode de réalisation, les moyens pour former la couche de viande hachée inférieure et supérieure sont disposés en amont des moyens pour déposer la garniture et comprennent un poussoir alimentant à la fois un premier bec de distribution pour former la couche de viande hachée inférieure sur la bande de transport principale et un deuxième bec de distribution pour former la couche de viande hachée supérieure sur une bande de transport secondaire, défilant en continue, disposée au-dessus de la bande de transport principale et apte à transporter et déposer ladite couche de viande hachée supérieure sur ladite couche de viande hachée inférieure et ladite garniture. Le dispositif comprend alors des moyens pour déposer latéralement la garniture, disposés entre la bande de transport principale et la bande de transport secondaire.

Les moyens de dépôt de garniture peuvent comprendre un doseur s'il s'agit d'une garniture liquide, ou un trancheur s'il s'agit d'une garniture classiquement conditionnée sous forme de boudin. Les moyens de dépôt latéral de garniture sous forme de tranches peuvent comprendre une roue crantée pour le convoyage des tranches, ladite roue étant montée en rotation au-dessus d'une plaque autour d'un axe disposé sensiblement perpendiculairement à la bande de transport principale. Lors de la rotation de la roue crantée, la partie périphérique de la roue munie des crans défile directement au-dessus de la bande de transport principale pour déposer par gravité sur la couche de viande hachée inférieure les tranches de garniture préalablement positionnées dans les crans de la roue. Bien entendu, l'invention permet d'associer en ligne sans aucune difficulté plusieurs moyens de dépôt de garniture.

L'ensemble des moyens pour couper ladite veine de viande hachée fourrée en portions et des moyens de formage desdites portions peuvent être un dispositif de coupe et de formage d'un type décrit dans la demande de brevet français n° 00 11259 (numéro de dépôt) au nom de la présente demanderesse. Un tel dispositif comprend, pour recevoir ladite veine de viande hachée fourrée, une bande transporteuse de formage et, le long de celle-ci, des moyens pour couper ladite veine de viande hachée fourrée en portions, des moyens de formage latéraux agissant simultanément de chaque côté de ladite veine de viande hachée fourrée pour former le contour desdites portions, et des moyens de formage verticaux coopérant avec lesdits moyens de formage latéraux pour conférer auxdites portions l'épaisseur souhaitée.

Les caractéristiques et avantages de l'invention mentionnés ci-dessus, ainsi que d'autres, apparaîtront plus clairement dans la description qui suit et les dessins joints, dans lesquels :
la Fig. 1 est une vue schématique de côté illustrant le procédé selon l'invention ;
la Fig. 2 est une vue semblable à la Fig. 1 illustrant de façon très schématique une ligne de fabrication mettant en oeuvre le procédé selon l'invention ;
la Fig. 3 est une vue schématique de côté d'un dispositif de coupe et de formage pouvant être utilisé dans la ligne de fabrication de la Fig. 2 ;
la Fig. 4 est une vue schématique de côté représentant à échelle agrandie une partie essentielle du dispositif de la Fig. 3 ;
la Fig. 5 est une vue schématique partielle de dessus de la partie du dispositif représentée à la Fig. 4 ;
la Fig. 6 est une vue schématique en perspective, à échelle agrandie, représentant à échelle agrandie et plus en détail la partie des Figs. 4 et 5 ;
les Figs. 7a à 7d sont des vues schématiques illustrant les différents mouvements d'éléments presseurs dans le dispositif des Figs. 3 à 6 ;
la Fig. 8 est une vue partielle de côté illustrant de façon très schématique une ligne de fabrication selon une variante de réalisation de l'invention; et
la Fig. 9 est une vue partielle de dessus de la ligne de fabrication de la Fig 8.

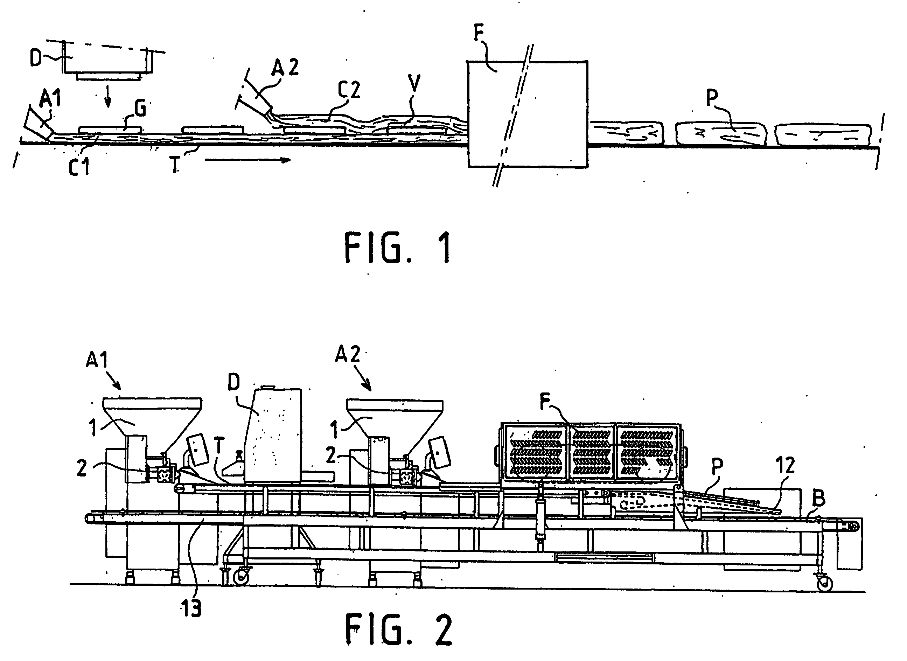

Considérant d'abord la Fig. 1, elle illustre le procédé de fabrication de steaks hachés fourrés selon l'invention, qui consiste ici à former sur une bande de transport T défilant en continu, une veine continue de viande hachée fourrée V.

Pour ce faire, un premier moyen amont A1 débite régulièrement de la viande hachée sur une largeur déterminée de la bande de transport T, pour former une couche de viande hachée inférieure C1.

Un distributeur de garniture D fait suite au moyen amont A1, qui dépose de la garniture à intervalles réguliers sur la couche de viande hachée inférieure C1, sous forme de doses de nappage relativement liquide, ou bien sous forme de tranches G comme représenté. D'autre part, il ressort à l'évidence du schéma que le dépôt de garniture peut également être réalisé sans complication aucune par plusieurs distributeurs disposés en série, ce qui donne la possibilité de réaliser des garnitures composites, ou bien de les alterner sur une même ligne de production.

En aval du dépôt de garniture, une couche supérieure de viande hachée continue C2 est formée par un second moyen A2 similaire au moyen amont A1, en recouvrement de la couche inférieure C1 et des tranches de garniture G.

Est ainsi réalisée la veine continue de viande hachée fourrée V qui passe ensuite dans un dispositif de coupe et de formage F fonctionnant en synchronisme avec la bande de transport T, pour d'une part traiter la veine V à mesure de sa formation, et d'autre part effectuer les coupes de mise en portions sensiblement au milieu des intervalles entre les tranches de garniture successives.

Les produits finis P ressortent en ligne du dispositif F, prêts à être conditionnés dans leur emballage.

La Fig. 2 représente un exemple de réalisation préféré de ligne de mise en oeuvre du procédé illustré à la Fig. 1.

De part et d'autre du distributeur de garniture D qui est un trancheur classique, les moyens A1 et A2 pour former respectivement les couches inférieure C1 et supérieure C2 de viande hachée comprennent chacun une trémie de stockage de viande 1, laquelle est pourvue en sortie d'un ensemble 2 regroupant un organe connu en tant que poussoir dans la fabrication de saucisse et qui assure un débit de sortie régulier, et associé à celui-ci, un broyeur avec une grille de sortie débitant la viande sous forme de fils, laquelle est ainsi déposée en passant dans un bec de distribution aplati en forme de pinceau.

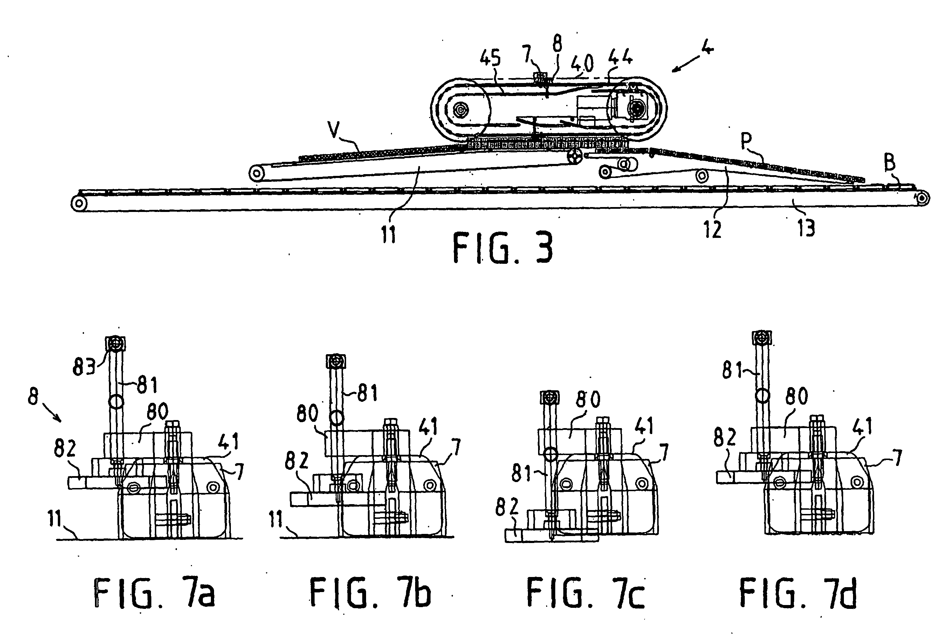

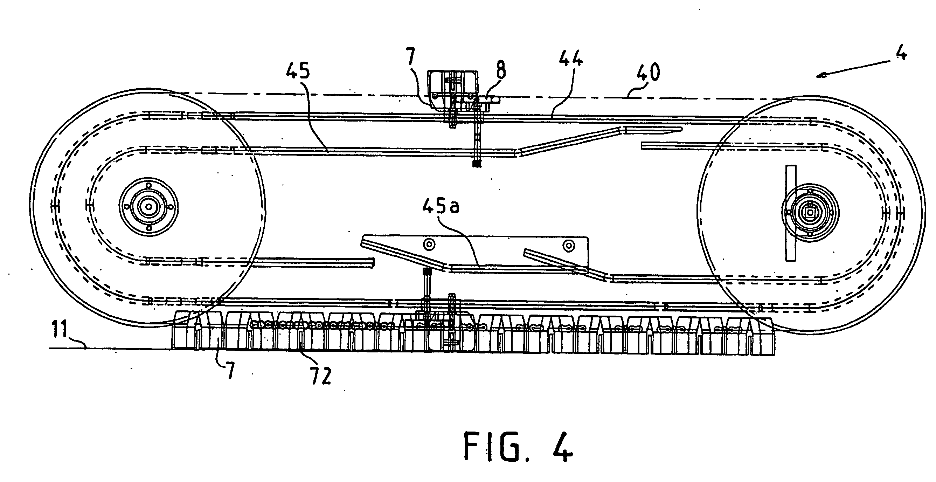

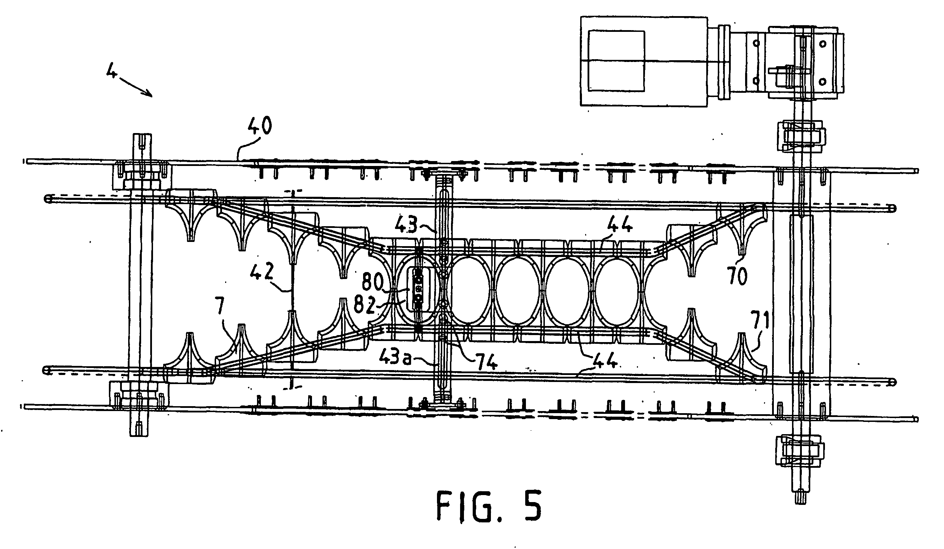

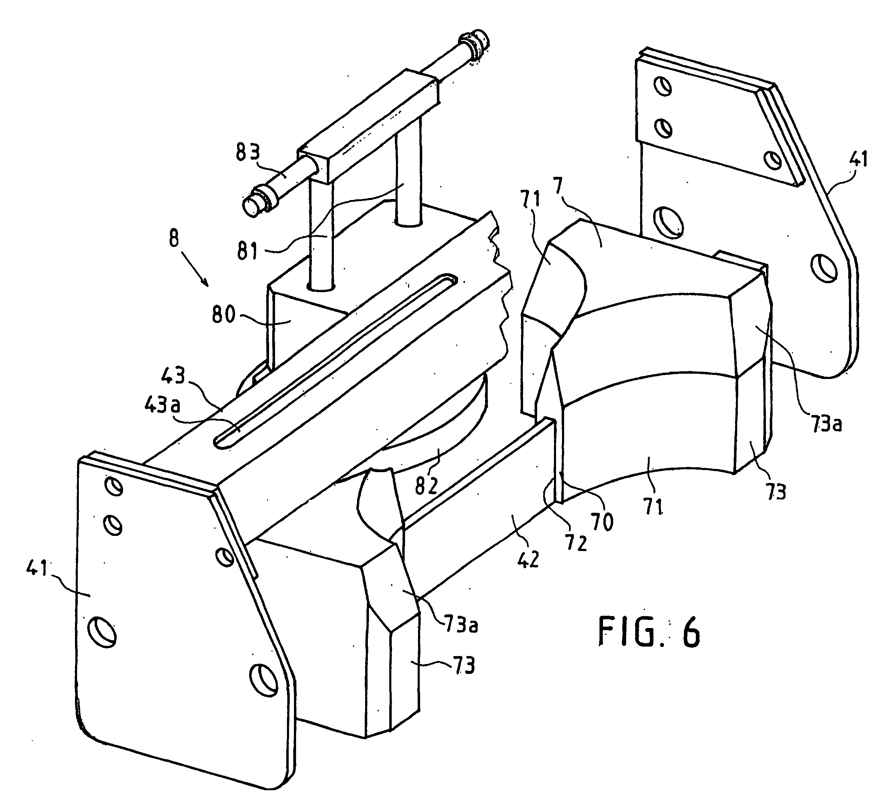

Le dispositif de coupe et de formage F est d'un type décrit dans la demande de brevet n° 00 11259 au nom de la présente demanderesse, avantageusement une forme de réalisation préférée qui va être décrite en détail ci-dessous et est représentée aux Figs. 3 à 7.

Les produits finis P sortant du dispositif F sont repris par un convoyeur 12 qui les transfère en sortie dans des barquettes de conditionnement B amenées par un convoyeur inférieur 13.

Tel que représenté aux Figs. 3 à 7, le dispositif de coupe et de formage F comprend une bande de transport 11 dite dans la suite bande transporteuse de formage, destinée à faire avancer la veine de viande hachée fourrée V à mesure de sa formation. En pratique, la bande 11 est avantageusement confondue avec la bande de transport T sur laquelle est constituée la veine V.

Les moyens de formage associés à la bande 11 comprennent des blocs de formage latéraux échancrés 7 qui défilent symétriquement en glissant de chaque côté et immédiatement au-dessus de celle-ci. Les blocs 7 sont en matière telle que polyéthylène de haute densité (PEHD) qui sont montés adjacents à la suite les uns des autres dans un même arrangement en boucle sans fin 4 monté au-dessus de la bande transporteuse de formage 11.

D'amont en aval sur la bande transporteuse de formage 11, les blocs 7 se rapprochent progressivement entre vis-à-vis, jusqu'à se toucher pour former avec elle, par leurs échancrures, des alvéoles de formage comme l'illustre la Fig. 5, puis ils s'écartent à nouveau.

Avec les blocs de formage latéraux 7, coopèrent des éléments presseurs 8 qui viennent fermer supérieurement lesdites alvéoles lorsqu'elles se forment, puis y descendent en deux temps dans celles-ci, d'abord pour y effectuer le compactage désiré des portions P, ensuite pour les transférer positivement à un niveau inférieur sur la bande transporteuse 12 faisant suite à la bande transporteuse de formage 11, et assurant leur chargement dans les barquettes de conditionnement B.

La coupe de la veine V en portions P est assurée en même temps et par les mêmes moyens que le formage.

L'arrangement 4 comprend deux mêmes chaînes 40 disposées en parallèle, sur les maillons desquelles sont fixés adjacents à la suite les uns des autres des flasques 41, Fig. 6. Les flasques 41 portent deux à deux une glissière transversale 42 et, au-dessus de celle-ci, une poutre de support transversale 43. De préférence, et comme représenté à la Fig. 6, les glissières 42 sont des barres plates disposées selon leur largeur perpendiculairement aux chaînes 40, et qui peuvent être insérées et bloquées dans des fentes de fixation ouvertes à l'opposé de la poutre 43 pour permettre un montage/démontage rapide.

Les blocs de formage latéraux 7 ont dans cette forme de réalisation la particularité d'être montés coulissants à cheval, en regard deux à deux, sur une glissière 42, par une fente 72 dans leur paroi inférieure, et d'être symétriques par rapport au plan de celle-ci. Ils présentent une pointe médiane 70 dirigée vers l'intérieur, et bordée de chaque côté par deux mêmes échancrures 71, de telle manière qu'une alvéole de formage sera formée non par deux mais par quatre blocs de formage, c'est-à-dire deux paires successives de blocs 7 en regard l'un de l'autre. Chaque bloc 7 et ses voisins immédiats de même côté sont jointifs pour la formation des alvéoles par des pans verticaux avant et arrière 73 prolongeant leurs échancrures 71 vers l'extérieur, les pans 73 s'inclinant vers le haut en 73a à partir d'une certaine hauteur pour permettre le passage autour des renvois d'extrémité. Les déplacements transversaux des blocs 7 sont commandés par des rails de guidage 44, qu'enserrent des paires de doigts 74 des blocs 7 traversant une fente de passage 43a ménagée dans les poutres 43, Fig. 5. Les blocs 7 sont maintenus en place sur leur glissière respective 42 par la poutre 43. Leur base coïncide avec le bord inférieur des glissières 42, de sorte que celles-ci viennent à fleur sur la bande transporteuse de formage 11 et procèdent à la coupe en portions de la veine de viande hachée fourrée V.

Outre assurer le maintien des blocs 7 à cheval sur leur glissière 42, les poutres 43 servent au support des éléments presseurs 8 qui ont leur corps de base 80 monté en console sur l'avant ou l'arrière de celles-ci. Les éléments presseurs 8 comportent des plaques de poussée 82 en bout de tiges 81 coulissant dans les corps de base 80, et dont les extrémités distales portent par l'intermédiaire d'un axe transversal 83 des galets, non représentés, coopérant avec un chemin de guidage 45 pour commander les déplacements. A noter qu'aux Figs. 3 et 4, le tronçon 45a du chemin de guidage correspondant à la section de formage est représenté réglable, pour permettre de modifier en fonction du besoin la course de pressage des éléments presseurs 8.

En fonctionnement, lorsque les blocs 7 arrivent au contact de la bande transporteuse de formage 11, ensemble avec leur glissière 42, celle-ci accomplit un sectionnement de la veine de viande hachée fourrée V, qui va être parfait par les blocs 7 en vis-à-vis lorsque leurs pointes 70 vont venir se rejoindre. Un synchronisme est prévu entre le distributeur de garniture D et le défilement des glissières 42, pour que le sectionnement de la veine V s'effectue bien dans l'intervalle entre deux doses de garniture.

Les éléments presseurs 8 assurent après le formage un transfert positif des portions P sur un tapis 12 dont l'entrée est en contrebas de la sortie de la bande de formage 11. Les diverses positions fonctionnelles des éléments presseurs 8 sont schématiquement représentées aux Figs. 7a à 7c : position relevée à la Fig. 7a, position de fin de pressage à la Fig. 7b, position de fin d'évacuation des portions à la Fig. 7c, et retour à la position relevée à la Fig. 7d.

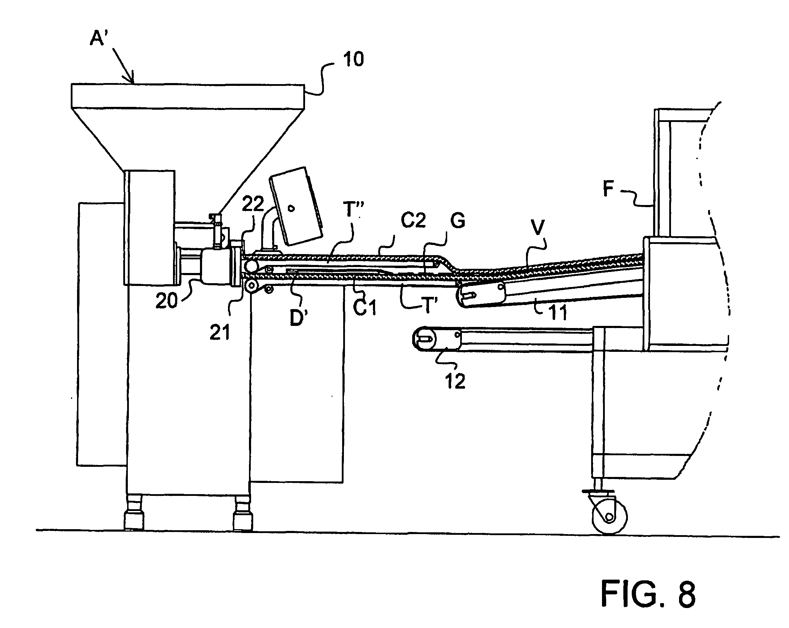

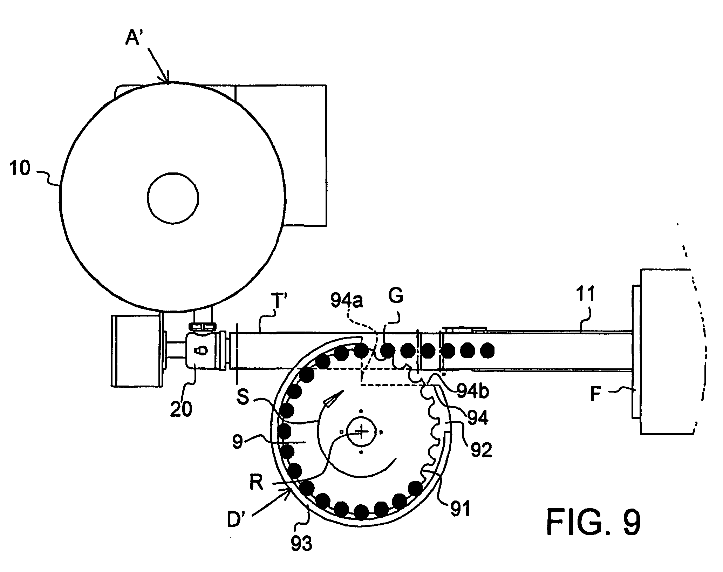

Les Fig. 8 et 9 représentent une variante de réalisation d'une ligne de fabrication selon l'invention. Dans cette variante de réalisation, les couches inférieure C1 et supérieure C2 de viande hachée sont réalisées par des moyens A1 disposés en amont de d'une bande de transport principale T'. ces moyens A' comprennent un ensemble unique 20 muni deux becs de distribution 21, 22 décalés verticalement l'un de l'autre. Cet ensemble 20 est de structure similaire de celle des ensembles 2 décrit précédemment en relation avec la Fig. 2. L'ensemble 20 est alimenté par une seule trémie de stockage de viande 10 et comprend un poussoir, un hachoir et au moins une grille de sortie intercalée entre ledit hachoir et les deux becs de distribution 21, 22. Un premier bec de distribution 21 dépose régulièrement de la viande hachée sur une bande de transport principale T' pour former la couche de viande hachée inférieure C1, tandis que le deuxième bec 22, positionné au-dessus du premier, dépose régulièrement de la viande hachée sur une bande secondaire T" disposée au-dessus de la bande de transport principale T', parallèlement à cette dernière. Tel qu'illustré à la Fig. 8, l'ensemble 20 est disposé en amont des bandes de transport principale T' et secondaire T", avec les becs de distribution sensiblement parallèles aux bandes de transport T' et T".

Un distributeur de garniture D' est disposé en aval de l'ensemble 20, entre les bandes de transport principale T' et secondaire T", et dépose la garniture sous forme de tranches G, à intervalles réguliers, sur la couche de viande hachée inférieure C1. En référence à la figure 9, le distributeur D' comprend une roue crantée de convoyage 9 montée en rotation autour d'un axe R entraîné par un moteur (non visible) et au-dessus d'une plaque circulaire 92. La plaque circulaire 92 comprend un rebord périphérique 93 s'étendant sur sensiblement 270° et disposé à distance des crans 91 de la roue. La plaque circulaire présente en outre au niveau de sa zone dépourvue de rebord une découpe périphérique 94 de forme globalement triangulaire définie par un premier bord radial 94a s'étendant radialement vers l'intérieur depuis l'une des extrémités du rebord 93, sensiblement sur la moitié du rayon de la plaque, et se prolongeant par un deuxième bord 94b qui lui est orthogonal.

L'axe R est disposé sensiblement perpendiculairement aux directions d'avancement des deux bandes de transport. Le distributeur D' est disposé de sorte que, lors de la rotation de la roue, les crans 91 de la roue défilent entre les bandes de transport principale T' et secondaire T", au-dessus de la bande de transport principale T', la découpe 94 de la plaque circulaire étant positionnée au niveau de la dite bande de transport principale T', avec son premier bord 94a sensiblement perpendiculaire aux bandes de transport.

Tel qu'illustré sur la figure 9, sur laquelle la bande de transport secondaire T" n'est pas représentée pour des raisons de clarté, chaque cran 91 de la roue est destinée à recevoir une tranche de garniture G. Les crans sont de forme semi-circulaire pour recevoir des tranches de garniture circulaires. Des roues munies de crans de forme différentes peuvent bien entendu être prévues en fonction de la forme des tranches de garniture à distribuer. La roue crantée est alimentée en tranches de garniture G au niveau de la zone de la plaque circulaire 92 dépourvue de rebord 93, dite zone d'alimentation , par exemple par une bande de transport au-dessus de laquelle est positionné un dispositif trancheur classique. Lors de la rotation de la roue dans le sens horaire, tel qu'illustré par la flèche référencée S, les tranches de garniture G sont amenées depuis la zone d'alimentation jusqu'au premier bord radial 94a de la découpe 94. Lors de ce déplacement les tranches de garniture reposent sur la plaque circulaire et sont maintenues dans les crans 91 par le rebord 93. Au delà du bord radial 94a, les tranches de garniture tombent par gravité sur la couche de viande inférieure C1.

La bande de transport secondaire T' est de longueur inférieure à celle de la bande de transport principale T", et la couche de viande supérieure C2 est déposée en sortie de cette bande de transport secondaire T" sur la couche de viande inférieure C1 et les tranches de garniture G venant d'être déposées, pour former la veine de viande hachée fourrée V. Bien entendu la vitesse de rotation de la roue 9 et les vitesses de déplacement des deux bandes de transport T' et T" sont synchronisées. Tel que décrit précédemment, la veine de viande hachée fourrée V est transférée à mesure de sa formation sur la bande de transport 11 du dispositif de coupe et de formage F.

L'utilisation d'un ensemble unique à double becs de distribution pour former les deux couches de viande hachée C1 et C2, en combinaison avec le distributeur de garniture pour amener latéralement la garniture entre les deux bandes de transport T' et T", permet d'obtenir une ligne de production moins longue, plus compacte. Le distributeur latéral de garniture pourra être adapté en fonction de la texture de la garniture utilisée.

## Revendications

1. Procédé de fabrication de pavés de viande hachée, notamment steaks hachés, fourrés d'une garniture, **caractérisé en ce qu'**il consiste à former une veine de viande hachée fourrée continue (V) en réalisant une couche inférieure de viande hachée continue (C1) ; déposant la garniture (G) sur ladite couche inférieure (C1) ; réalisant une couche supérieure de viande hachée continue (C2) en recouvrement de ladite couche inférieure (C1) et de la garniture (G) déposée sur celle-ci ;
puis à couper en portions (P) ladite veine de viande hachée fourrée (V) ; et à mettre en forme lesdites portions (P) en les tassant de chaque côté de ladite veine de viande hachée fourrée (V) pour former le contour desdites portions (P), et verticalement pour conférer aux portions (P) l'épaisseur souhaitée.

2. Dispositif de mise en oeuvre du procédé selon la revendication 1, **caractérisé en ce qu'**il comprend :
une bande de transport principale (T, T') défilant en continu ;
et au-dessus de celle-ci, pour y former ladite veine de viande hachée fourrée (V), des moyens (A1, A') pour former ladite couche de viande hachée inférieure (C1), des moyens (D, D') pour déposer ladite garniture (G) sur ladite couche de viande hachée inférieure (C1), et des moyens (A2, A', T") pour former ladite couche de viande hachée supérieure (C2) en recouvrement de ladite couche de viande hachée inférieure (C1) et de ladite garniture (G) ;
ainsi que des moyens pour couper ladite veine de viande hachée fourrée (V) en portions (P) et des moyens de formage desdites portions (P), qui fonctionnent en synchronisme avec ladite bande de transport (T).

3. Dispositif selon la revendication 2, **caractérisé en ce que** lesdits moyens (A1, A2, A') pour former l'une et/ou l'autre des couches de viande hachée inférieure (C1) et supérieure (C2) comprennent au moins un bec de distribution alimenté par un organe de régulation de débit dit "poussoir".

4. Dispositif selon la revendication 3, **caractérisé en ce qu'**est associé audit organe de régulation de débit un hachoir.

5. Dispositif selon l'une des revendications revendication 2 à 4, **caractérisé en ce qu'**il comprend, d'amont en aval de ladite bande de transport principale (T), lesdits moyens (A1) pour former ladite couche de viande hachée inférieure (C1), lesdits moyens (D) pour déposer ladite garniture (G), et lesdits moyens (A2) pour former ladite couche de viande hachée supérieure (C2).

6. Dispositif selon la revendication 4, **caractérisé par le fait que** lesdits moyens (A') pour former ladite couche de viande hachée inférieure (C1) et supérieure (C2) comprennent un organe de régulation de débit dit "poussoir" alimentant un premier bec de distribution (21) pour former la couche de viande hachée inférieure sur la bande de transport principale (T') et un deuxième bec de distribution (22) pour former la couche de viande hachée supérieure sur une bande de transport secondaire (T'), défilant en continue, disposée au-dessus de la bande de transport principale et apte à transporter et déposer ladite couche de viande hachée supérieure sur ladite couche de viande hachée inférieure (C1) et ladite garniture (G), lesdits moyens (D') pour déposer latéralement la garniture (G) étant disposés entre la bande de transport principale et la bande de transport secondaire.

7. Dispositif selon l'une des revendications 2 à 6, **caractérisé en ce que** les moyens de dépôt de garniture (D, D') comprennent un trancheur pour distribuer des tranches de garniture conditionnée sous forme de boudin.

8. Dispositif selon l'une des revendications 5 à 7, **caractérisé en ce que** les moyens (D, D') de dépôt de garniture (G) comprennent une roue crantée (9) pour le convoyage de tranches de garniture (G), ladite roue étant montée en rotation, au-dessus d'une plaque (92), autour d'un axe (R) disposé sensiblement perpendiculairement à la bande de transport principale (T'), de sorte que, lors de la rotation de la roue crantée, la partie périphérique de la roue munie des crans (91) défile directement au-dessus de la bande de transport principale (T') pour déposer par gravité sur la couche de viande hachée inférieure (C1) les tranches de garniture préalablement positionnées dans les crans de la roue.

9. Dispositif selon l'une des revendications 2 à 7, **caractérisé en ce que** les moyens de dépôt de garniture comprennent un doseur pour distribuer de la garniture liquide.

10. Dispositif selon l'une des revendications 2 à 9, **caractérisé en ce que** l'ensemble des moyens pour couper ladite veine de viande hachée fourrée (V) en portions (P) et des moyens de formage desdites portions (P) sont un dispositif de coupe et de formage comprenant, pour recevoir ladite veine de viande hachée fourrée (V), une bande transporteuse de formage (11) et, le long de celle-ci, des moyens pour couper ladite veine de viande hachée fourrée (V) en portions (P), des moyens de formage latéraux (7) agissant simultanément de chaque côté de ladite veine de viande hachée fourrée (V) pour former le contour desdites portions (P), et des moyens de formage verticaux (8) coopérant avec lesdits moyens de formage latéraux (7) pour conférer auxdites portions (P) l'épaisseur souhaitée.

11. Dispositif selon la revendication 10, **caractérisé en ce que** lesdits moyens de formage latéraux (7) sont des blocs échancrés défilant symétriquement de chaque côté et immédiatement au-dessus de ladite bande transporteuse de formage (11), qui d'amont en aval se rapprochent jusqu'à se toucher pour former par leurs échancrures et avec ladite bande transporteuse de formage (11) des alvéoles de formage, lesdits moyens de formage verticaux (8) étant des éléments presseurs venant au-dessus de ladite bande transporteuse de formage (11), entre lesdits blocs de formage latéraux (7), et qui défilent de façon synchrone avec eux.

12. Dispositif selon la revendication 11, **caractérisé en ce que** lesdits blocs de formage latéraux (7) présentent chacun deux échancrures (71) de chaque côté d'une pointe centrale (70), de telle manière que les alvéoles de formage se forment chacune entre deux paires consécutives de blocs de formage latéraux en regard, lesdits blocs (7) étant montés coulissants deux à deux en regard sur une glissière transversale (42).

13. Dispositif selon la revendication 12, **caractérisé en ce que** lesdits blocs de formage latéraux (7) comportent dans leur paroi inférieure une fente (72) par laquelle ils sont montés coulissants sur leur glissière respective (42), celle-ci étant une barre plate et procédant à la coupe en portions (P) de ladite veine de viande hachée (V).

14. Dispositif selon la revendication 12 ou 13, **caractérisé en ce que** lesdits éléments presseurs (8) sont portés en console par des poutres (43) dont chacune est montée au-dessus d'une glissière (42) et fixée avec elle entre deux flasques latéraux (41) qui sont eux-mêmes fixés aux maillons de deux chaînes en parallèle (40) d'un arrangement en boucle sans fin (4).

15. Dispositif selon l'une des revendications 11 à 14 , **caractérisé en ce que** les éléments presseurs (8) constituant les moyens de formage verticaux ont un supplément de course pour évacuer positivement les portions (P) après le formage.

## Patentansprüche

1. Verfahren zum Herstellen von Blöcken aus Hackfleisch, insbesondere von Hacksteaks, die mit einer Garnierung gefüllt sind, **dadurch gekennzeichnet, daß** das Verfahren darin besteht, einen Strang von Hackfleisch (V) zu formen, der fortlaufend gefüllt wird, indem eine fortlaufende untere Schicht aus Hackfleisch (C1) erzeugt wird; die Garnierung (G) auf der genannten unteren Schicht (C1) abgeleg wird; eine fortlaufende obere Schicht aus Hackfleisch (C2) erzeugt wird, die die genannte untere Schicht (C1) und die Garnierung (G), die auf dieser abgelegt ist, überdeckt;
wobei dann der genannte Strang aus gefülltem Hackfleisch (V) in Portionen (P) geschnitten wird; und wobei die genannten Portionen (P) in eine Form gebracht werden, indem sie von jeder Seite des genannten Strangs von gefülltem Hackfleisch (V) verdichtet werden, um die Kontur der genannten Portionen (P) zu formen, und in vertikaler Richtung, um den Portionen (P) die gewünschte Dicke zu geben.

2. Vorrichtung zur Ausführung des Verfahrens nach Anspruch 1, **dadurch gekennzeichnet, daß** diese umfaßt:
ein Haupttransportband (T, T'), welches fortlaufend durchläuft;
und oberhalb von diesem, um den genannten Strang von gefülltem Hackfleisch (V) zu bilden, Mittel (A1, A') zum Formen der genannten unteren Schicht aus Hackfleisch (C1), Mittel (D, D') zum Ablegen der genannten Garnierung (G) auf der genannten unteren Schicht von Hackfleisch (C1), und Mittel (A2, A', T"), um die genannte obere Schicht von Hackfleisch (C2) zu formen, die die genannte untere Schicht von Hackfleisch (C1) und die genannte Garnierung (G) überdeckt;
und auch Mittel, um den genannten Strang von gefülltem Hackfleisch (V) in Portionen (P) zu schneiden, und Mittel zur Ausformung der genannten Portionen (P), die synchron mit dem genannten Transportband (T) arbeiten.

3. Vorrichtung nach Anspruch 2, **dadurch gekennzeichnet, daß** die genannten Mittel (A1, A2, A') zum Formen der einen und/oder der anderen der unteren (C1) und oberen (C2) Schicht von Hackfleisch zumindest ein Verteilungsmundstück aufweisen, das durch ein Organ zur Regelung des Durchsatzes versorgt wird, welches als "Ausstoßer" bezeichnet wird.

4. Vorrichtung nach Anspruch 3, **dadurch gekennzeichnet, daß** dem genannten Organ zur Regulierung des Durchsatzes ein Fleischwolf zugeordnet ist.

5. Vorrichtung nach einem der Ansprüche 2 bis 4, **dadurch gekennzeichnet, daß** diese von aufwärts nach abwärts des genannten Haupttransportbands (T) die genannten Mittel (A1) zum Formen der genannten unteren Schicht von Hackfleisch (C1), die genannten Mittel (D) zum Ablegen der genannten Garnierung (G) und die genannten Mittel (A2) zum Formen der genannten oberen Schicht von Hackfleisch (C2) aufweist.

6. Vorrichtung nach Anspruch 4, **dadurch gekennzeichnet, daß** die genannten Mittel (A') zum Formen der genannten unteren (C1) und oberen (C2) Schicht von Hackfleisch ein Organ zur Regulierung des Durchsatzes aufweisen, das als "Ausstoßen" bezeichnet wird und ein erstes Verteilungsmundstück (21) speist, um die untere Schicht von Hackfleisch auf dem Haupttransportband (T') zu formen, und ein zweites Verteilungsmundstück (22), um die obere Schicht von Hackfleisch auf einem sekundären Transportband (T') zu formen, welches fortlaufend durchläuft, oberhalb des Haupttransportbands angeordnet ist und dazu geeignet ist, die genannte obere Schicht von Hackfleisch zu transportieren und auf der genannten unteren Schicht von Hackfleisch (C1) und der genannten Garnierung (G) abzulegen, wobei die genannten Mittel (D') zum seitlichen Ablegen der Garnierung (G) zwischen dem Haupttransportband und dem sekundären Transportband angeordnet sind.

7. Vorrichtung nach einem der Ansprüche 2 bis 6, **dadurch gekennzeichnet, daß** die Mittel zum Ablegen der Garnierung (D, D') ein Schneidgerät zum Verteilen von Scheiben der Garnierung aufweisen, die in Form einer Wurst konditioniert ist.

8. Vorrichtung nach einem der Ansprüche 5 bis 7, **dadurch gekennzeichnet, daß** die Mittel (D, D') zum Ablegen der Garnierung (G) ein mit Ausnehmungen versehenes Rad (9) aufweisen, für den Transport der Scheiben der Garnierung (G), wobei das genannte Rad zur Drehung oberhalb einer Platte (92) gehalten ist, um eine Achse (R), die im wesentlichen senkrecht zu dem Haupttransportband (T') angeordnet ist, so daß bei der Drehung des mit Ausnehmungen versehenen Rades der Umfangsbereich des Rades, der mit den Ausnehmungen (91) versehen ist, unmittelbar oberhalb des Haupttransportbands (T') vorbeigeht, um die Scheiben der Garnierung, die vorher in den Ausnehmungen des Rades positioniert worden waren, aufgrund ihrer Schwerkraft auf der unteren Schicht von Hackfleisch (C1) abzulegen.

9. Vorrichtung nach einem der Ansprüche 2 bis 7, **dadurch gekennzeichnet, daß** Mittel zum Ablegen der Garnierung eine Dosierungseinrichtung zum Verteilen von flüssiger Garnierung aufweisen.

10. Vorrichtung nach einem der Ansprüche 2 bis 9, **dadurch gekennzeichnet, daß** die Gesamtheit der Mittel zum Schneiden des genannten Strangs von gefülltem Hackfleisch (V) in Portionen (P) und der Mittel zur Ausformung der genannten Portionen (P) aus einer Vorrichtung zum Schneiden und Ausformen bestehen, die, zum Aufnehmen des genannten Strangs von gefülltem Hackfleisch (V), ein Transportband zur Ausformung (11) und, entlang dessen, Mittel zum Schneiden des genannten Strangs von gefülltem Hackfleisch (V) in Portionen (P) aufweist, wobei seitliche Mittel zur Ausformung (7) gleichzeitig von beiden Seiten des genannten Strangs von gefülltem Hackfleisch (V) wirken, um die Kontur der genannten Portionen (P) auszuformen, und wobei vertikale Mittel zur Ausformung (8) mit den genannten seitlichen Mitteln zur Ausformung (7) zusammenwirken, um den genannten Portionen (P) die gewünschte Dicke zu geben.

11. Vorrichtung nach Anspruch 10, **dadurch gekennzeichnet, daß** die genannten seitlichen Mittel zur Ausformung (7) mit Aussparungen versehene Blöcke sind, die symmetrisch auf jeder Seite und unmittelbar oberhalb des genannten Transportbands zur Ausformung (11) vorbeilaufen, und die sich von aufwärts nach abwärts einander annähern, bis sie sich berühren, um durch ihre Aussparungen und mit dem genannten Transportband zur Ausformung (11) Zellen zur Ausformung bilden, wobei die genannten vertikalen Mittel zur Ausformung (8) Stößel sind, die von oberhalb des genannten Transportbands zur Ausformung (11) zwischen die genannten seitlichen Blöcke zur Ausformung (7) kommen und die synchron mit diesen vorbeilaufen.

12. Vorrichtung nach Anspruch 11, **dadurch gekennzeichnet, daß** die genannten seitlichen Blöcke zur Ausformung (7) jeweils mit zwei Aussparungen (71) auf jeder Seite von einer zentralen Spitze (70) versehen sind, so daß die Zellen zur Ausformung sich jeweils zwischen zwei aufeinanderfolgenden Paaren von seitlichen Blöcken zur Ausformung, die einander gegenüberstehen, bilden, wobei die genannten Blöcke (7) paarweise verschieblich einander gegenüberstehend auf einer in Querrichtung angeordneten Gleitschiene (42) gehalten sind.

13. Vorrichtung nach Anspruch 12, **dadurch gekennzeichnet, daß** die genannten seitlichen Blöcke zur Ausformung (7) in ihrer unteren Wand einen Schlitz (72) aufweisen, mit dem sie verschieblich auf ihrer entsprechenden Gleitschiene (42) gehalten sind, wobei diese eine ebene Stange ist, und den Schnitt des genannten Strangs von Hackfleisch (V) in Portionen (P) vornehmen.

14. Vorrichtung nach Anspruch 12 oder 13, **dadurch gekennzeichnet, daß** die genannten Stößel (8) tragarmartig auf Trägern (43) gehalten sind, von denen jeder oberhalb einer Gleitschiene (42) angebracht und mit dieser zwischen zwei seitlichen Flanschen (41) befestigt ist, die ihrerseits an den Gliedern von zwei parallelen Ketten (40) einer Anordnung in Form einer endlosen Schleife (4) befestigt sind.

15. Vorrichtung nach einem der Ansprüche 11 bis 14, **dadurch gekennzeichnet, daß** die Stößel (8), die die vertikalen Mittel zur Ausformung bilden, einen zusätzlichen Hub aufweisen, um die Portionen (P) zwangsläufig aus den genannten Zellen zur Ausformung herauszubewegen.

## Claims

1. Method for the production of minced meat patties, especially minced meat steaks, stuffed with a garnish, **characterized in that** it consists in forming a continuous loaf of stuffed minced meat (V) by making a continuous lower layer of minced meat (C1); placing the garnish (G) on said lower layer (C1); producing a continuous upper layer of minced meat (C2) in covering said lower layer (C1) and the garnish (G) placed on this lower layer;
then cutting said loaf of stuffed minced meat (V) into portions (P); and shaping said portions (P) by compressing them on each side of said loaf of stuffed minced meat (V) to shape the contour of said portions (P), and vertically in order to provide said portions (P) with the desired thickness.

2. Device for implementing the method according to claim 1, **characterized in that** it comprises:
a continuously running main conveyor belt (T, T');
and above this belt, for the formation therein of said loaf of stuffed minced meat (V), means (A1, A') to form said lower layer of minced meat (C1), means (D, D') to place said garnish (G) on said lower layer of minced meat (C1), and means (A2, A', T") to form said upper layer of minced meat (C2) overlapping said lower layer of minced meat (C1) and said garnish (G);
as well as means to cut said loaf of stuffed minced meat (V) into portions (P) and means for shaping said portions (P), that work in synchronism with said conveyor belt (T).

3. Device according to claim 2, **characterized in that** said means (A1, A2, A') to form one or both of the lower (C1) and upper (C2) layers of minced meat comprise at least one dispenser spout fed by a flow-rate regulation unit called a "stuffer".

4. Device according to claim 3, **characterized in that** a mincing machine is associated with said flow-rate regulation unit.

5. Device according to any of the claims 2 to 4, **characterized in that** it comprises, from upstream to downstream relative to said main conveyor belt (T): said means (A1) to form said lower layer of minced meat (C1), said means (D) to place said garnish (G), and said means (A2) to form said upper layer of minced meat (C2).

6. Device according to claim 4, **characterized by** the fact that said means (A') to form said lower layer (C1) and upper layer (C2) comprise a flow-rate regulation unit called a "stuffer" feeding a first dispenser spout (21) to form the lower minced meat layer on the main conveyor belt (T') and a second dispenser spout (22) to form the upper minced meat layer on a secondary conveyor belt (T'), running continuously, placed above the main conveyor belt and capable of conveying and placing said upper layer of minced meat on said lower layer of minced meat (C1) and said garnish (G), said means (D') to place the garnish (G) laterally being positioned between the main conveyor belt and the secondary conveyor belt.

7. A device according to any of the claims 2 to 6, **characterized in that** the garnish placing means (D, D') comprise a slicing machine to dispense slices of garnish packaged in strand form.

8. A device according to any of the claims 5 to 7, **characterized in that** the means (D, D') for the placing of the garnish (G) include a notched wheel (9) for the conveyance of the slices of garnish (G), said wheel being mounted rotationally above a plate (92) about a shaft (R) positioned substantially perpendicularly to the main conveyor belt (T') so that, during the rotation of the notched wheel, the peripheral part of the wheel provided with notches (91) runs directly above the main conveyor belt (T') to lay the slices of garnish, previously positioned in the notches of the wheel, by gravity on the lower layer of minced meat (C1).

9. A device according to any of the claims 2 to 7, **characterized in that** the means (D, D') for placing the garnish (G) comprise a dosing device to distribute liquid garnish.

10. A device according to any of the claims 2 to 9, **characterized in that** the set of means used to cut said loaf of stuffed minced meat (V) into portions (P) and means for shaping said portions (P) are a cutting and shaping device comprising the following to receive said loaf of stuffed minced meat (V): a shaping conveyor belt (11) and, along it, means to cut said loaf of stuffed minced meat (V) into portions, lateral shaping means (7) acting simultaneously on each side of said loaf of stuffed minced meat (V) to shape the contour of said portions (P), and vertical shaping means (8) co-operating with said lateral shaping means (7) to give said portions (P) the desired thickness.

11. Device according to claim 10, **characterized in that** said lateral shaping means (7) are indented blocks running symmetrically on each side and immediately above said shaping conveyor belt (11) which, from upstream to downstream, approach each other until they touch each other to form shaping cavities by their indents and with said shaping conveyor belt (11), said vertical shaping means (8) being pressing elements that come over said shaping conveyor belt (11), between said lateral shaping devices (7), and run synchronously with them.

12. Device according to claim 11, **characterized in that** each of said lateral shaping blocks (7) has two indents (71) on each side of a central tip (70), in such a way that the shaping cavities are formed between two consecutive pairs of facing lateral shaping blocks, said blocks (7) being mounted so as to be sliding two by two, facing each other on a transversal runner (42).

13. Device according to claim 12, **characterized in that** said lateral shaping blocks,(7) comprise, in their lower wall, a slit (72) through which they are mounted in a sliding position on their respective runner (42), this runner being a flat bar proceeding to cut said loaf of minced meat (V) into portions (P).

14. Device according to claim 12 or 13, **characterized in that** said pressing elements (8) are borne as brackets by beams (43), each of which is mounted on top of a runner (42) and fixed with it between two lateral endplates (41) which are themselves fixed to the links of two parallel chains (40) of an endless loop arrangement (4).

15. Device according to any of the claims 11 to 14, **characterized in that** the pressing elements (8) constituting the vertical shaping means have a supplementary run to positively discharge the portions (P) after the shaping.
